# EUROPEAN PATENT APPLICATION

(11) **EP 4 852 608 A2**
(43) Date of publication of application: **09.12.2026**
(21) Application number: 26182571.5
(22) Date of filing: 02.06.2026
(51) Int. Cl.: H04W 84/12, H04W 74/0816

(54) **SYSTEM AND METHOD FOR WIRELESS COMMUNICATION USING NON-PRIMARY CHANNEL ACCESS**

(30) Priority: 06.06.2025 IN 202511054801; 29.04.2026 US 202619661880
(71) Applicant: Avago Technologies International Sales Pte. Limited, Singapore 768923 (SG)
(72) Inventor: Verma, Sindhu, 560100 Bangalore, Karnataka (IN); Adhikari, Shubhodeep, 560100 Bangalore, Karnataka (IN); Su, Hang, San Jose, CA, 95134 (US); Puducheri Sundaravaradhan, Srinath, San Jose, CA, 95134 (US)
(74) Representative: Grünecker Patent- und Rechtsanwälte PartG mbB

(57) **Abstract**

A system for non-primary channel access (NPCA) contention window size determination in a wireless communication network includes an access point (AP) configured to obtain transmission attempt statistics on an NPCA primary channel for at least one access category (AC), calculate an average queue short retry count based on the transmission attempt statistics, derive a basic service set (BSS)-wide scaling factor from the average queue short retry count, and indicate the BSS-wide scaling factor to one or more associated stations. The system further includes a station configured to receive the BSS-wide scaling factor from the AP, determine an initial contention window size using the BSS-wide scaling factor, and contend for channel access on the NPCA primary channel using the determined initial contention window size.

## Description

### CROSS-REFERENCE TO RELATED APPLICATIONS

The present application claims priority to Indian Provisional Application No. 202511054801, filed June 6, 2025, the entire content of which is incorporated by reference herein in its entirety for all purposes.

### FIELD OF INVENTION

The present disclosure relates to wireless communication systems employing non-primary channel access (NPCA) in Wi-Fi networks, and more particularly to methods, devices, and systems for optimizing NPCA operations through contention window size determination, exception handling in overlapping basic service set (OBSS) scenarios, and gain guidance for feature enablement decisions.

### BACKGROUND

Wireless local area networks (WLANs) based on the IEEE 802.11 family of standards provide connectivity for a wide range of devices in residential, enterprise, and public settings. As wireless network deployments have grown in density and complexity, the demand for higher throughput, lower latency, and more efficient spectrum utilization has correspondingly increased.

In some 802.11 networks, devices contend for channel access on a designated primary channel using Enhanced Distributed Channel Access (EDCA) mechanisms. The contention window (CW) parameter governs the randomness of channel access attempts, with devices drawing random backoff values within a range bounded by the contention window size. This mechanism helps reduce collisions when multiple devices attempt to transmit simultaneously. The contention window size is typically adjusted based on transmission success or failure, starting from a minimum value and increasing upon encountering errors.

Recent developments in 802.11 standards have introduced features that allow devices to utilize portions of the operating bandwidth beyond the primary channel under certain conditions. When the primary channel is occupied by transmissions from overlapping basic service sets (OBSS), devices may have opportunities to access secondary portions of the bandwidth. However, determining appropriate contention parameters for such secondary channel access presents challenges, as the congestion characteristics may differ from those experienced on the primary channel.

Multi-access point deployments, including mesh networks and enterprise configurations, introduce additional complexity in wireless network operation. In such environments, access points may communicate with each other over backhaul links while simultaneously serving client devices on fronthaul connections. Similarly, client devices may maintain concurrent connections, such as peer-to-peer (P2P) associations alongside infrastructure associations. These overlapping network configurations can create ambiguity in how devices classify transmissions from different network entities.

Modem wireless devices increasingly support multiple operational features that can enhance performance, including multi-link operation, dynamic bandwidth adaptation, and secondary channel access capabilities. However, enabling these features typically requires hardware and memory resources that may be constrained in certain device implementations, particularly in cost-sensitive or power-constrained non-access point devices. Without guidance regarding the potential benefits of various features in a given network environment, devices may make suboptimal decisions regarding which capabilities to enable.

Accordingly, there remains a need for improved techniques for managing channel access parameters, handling overlapping network scenarios, and providing guidance for feature enablement decisions in wireless communication systems.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a method for non-primary channel access (NPCA) contention window size determination in a wireless communication system is provided. The method includes initiating NPCA channel access for an access category (AC) at a device. The method includes collecting, by an access point (AP), transmission attempt statistics on an NPCA primary channel. The method includes determining whether client feedback is available. The method includes, when client feedback is available, incorporating the client feedback into an average queue short retry count calculation. The method includes calculating the average queue short retry count based on available statistics. The method includes calculating an initial contention window size using a basic service set (BSS)-wide scaling factor derived from the average queue short retry count. The method includes contending for channel access on the NPCA primary channel using the calculated an initial contention window size.

According to other aspects of the present disclosure, the method may include one or more of the following features. The initial contention window size may be set to a contention window minimum (CWmin) for the access category. The initial contention window size may be set to a current value of contention window for the access category on a BSS primary channel. The initial contention window size may be set to a last used value of contention window for the access category on the NPCA primary channel. The initial contention window size may be reset to CWmin when a time greater than a memory threshold (T_cw_memory) has elapsed since a last transmission on the NPCA primary channel. The BSS-wide scaling factor may be specific to the access category. The BSS-wide scaling factor may be common to all access categories. The initial contention window size may be calculated as CW_init = min(2^Avg_QSRC_NPCA[AC] × (CWmin[AC] + 1) - 1, CWmax[AC]), where Avg_QSRC_NPCA[AC] is the average number of transmission attempts on the NPCA primary channel for the access category before successfully transmitting a packet for that access category. The client feedback may include an average number of transmission attempts on the NPCA primary channel for the access category before successfully transmitting a packet. The AP may disregard an access category while calculating average queue short retry count when the access category is missing from a set of traffic identifiers in use in the BSS or is sparse.

According to another aspect of the present disclosure, a method for NPCA exception handling in overlapping BSS scenarios is provided. The method includes detecting, at a device, a potential NPCA opportunity based on an overlapping BSS (OBSS) physical layer protocol data unit (PPDU) or control frame exchange. The method includes retrieving exception parameters including disallowed BSS colors and MAC addresses. The method includes determining whether an exception applies by checking if a detected BSS color or MAC address matches the exception parameters. The method includes, when an exception applies, aborting an NPCA switch and remaining on a primary channel. The method includes, when no exception applies, switching to an NPCA primary channel and contending for channel access.

According to other aspects of the present disclosure, the method may include one or more of the following features. A pair of access points may pre-negotiate a special BSS color to be used for inter-AP communication, and stations of each AP may be notified of the special BSS color and that NPCA is disallowed for HE/EHT/UHR PPDUs that signal the special BSS color. A client may negotiate a BSS color for peer-to-peer (P2P) communication that is different from an infrastructure BSS color, and the infrastructure BSS color may be indicated to a peer of the client. BSS color 0 may be used for all inter-AP communication, and stations associated to an AP may be disallowed from performing NPCA over HE/EHT/UHR PPDUs with BSS color 0. The exception parameters may include a complete or reduced value of a BSS color of a BSS that NPCA-capable stations are associated with and who are intended to be prevented from performing NPCA. The BSS color rules may be applied even when HE/EHT/UHR PPDUs are preceded by an OBSS control frame exchange. Specific MAC addresses may be indicated by APs or P2P participants which, even though would normally qualify as OBSS, are not used to initiate NPCA transmissions.

According to another aspect of the present disclosure, a method for NPCA gain guidance enabling non-AP devices to make informed feature enablement decisions is provided. The method includes receiving, at a non-AP device, OBSS load parameters from an access point. The OBSS load parameters include OL_i representing OBSS load for full bandwidth, OLp_i representing OBSS load for primary half bandwidth, and OLs_i representing OBSS load for secondary half bandwidth. The OBSS load parameters are advertised in beacon or ultra-high reliability (UHR) parameters. The method includes evaluating available resources at the non-AP device. The method includes calculating potential gain for each feature using the received OBSS load parameters. The method includes determining whether resource constraints require feature selection. The method includes, when resource constraints require selection, selecting features to enable based on calculated gains and available resources. The method includes requesting feature enablement from the AP.

According to other aspects of the present disclosure, the method may include one or more of the following features. The features may include NPCA, enhanced multi-link single radio (EMLSR), and dynamic sub-band operation (DSO). The available resources may include memory and dedicated hardware. A single link throughput may be calculated based on bandwidth and OBSS load parameters. An EMLSR throughput may be calculated based on single link throughputs of multiple links and probabilities of link occupancy. An NPCA throughput may be calculated based on single link throughput and additional throughput achievable when a primary channel is busy and a secondary channel is idle. The non-AP device may select EMLSR when EMLSR throughput exceeds NPCA throughput. The non-AP device may select NPCA when a probability of the primary channel being busy while the secondary channel is idle is high.

According to another aspect of the present disclosure, a wireless communication device is provided. The device includes a processor and a memory storing instructions that, when executed by the processor, cause the device to perform operations. The operations include initiating NPCA channel access for an access category. The operations include receiving a BSS-wide scaling factor from an access point. The operations include calculating an initial contention window size using the BSS-wide scaling factor. The operations include contending for channel access on an NPCA primary channel using the calculated initial contention window size.

According to other aspects of the present disclosure, the device may include one or more of the following features. The device may be configured to provide feedback to the access point including an average number of transmission attempts on the NPCA primary channel before successfully transmitting a packet. The device may be configured to reset the initial contention window size to a contention window minimum when a time greater than a memory threshold has elapsed since a last transmission on the NPCA primary channel.

According to another aspect of the present disclosure, an access point device is provided. The access point device includes a processor and a memory storing instructions that, when executed by the processor, cause the access point device to perform operations. The operations include collecting transmission attempt statistics on an NPCA primary channel. The operations include receiving client feedback including average transmission attempt counts. The operations include calculating an average queue short retry count based on the transmission attempt statistics and the client feedback. The operations include calculating a BSS-wide scaling factor based on the average queue short retry count. The operations include indicating the BSS-wide scaling factor to associated stations.

According to other aspects of the present disclosure, the access point device may include one or more of the following features. The access point device may be configured to calculate a scaling factor specific to each access category. The access point device may be configured to calculate a scaling factor common to all access categories. The access point device may be configured to disregard an access category when calculating the average queue short retry count when the access category is missing from a set of traffic identifiers in use or is sparse.

According to another aspect of the present disclosure, a wireless communication device configured for NPCA exception handling is provided. The device includes a processor and a memory storing instructions that, when executed by the processor, cause the device to perform operations. The operations include receiving exception parameters from an access point, the exception parameters including disallowed BSS colors and MAC addresses. The operations include detecting a potential NPCA opportunity based on an OBSS PPDU or control frame exchange. The operations include determining whether the detected BSS color or MAC address matches the exception parameters. The operations include aborting an NPCA switch when the detected BSS color or MAC address matches the exception parameters.

According to another aspect of the present disclosure, a non-AP wireless communication device configured for feature enablement based on gain guidance is provided. The device includes a processor and a memory storing instructions that, when executed by the processor, cause the device to perform operations. The operations include receiving OBSS load parameters from an access point, the OBSS load parameters being advertised in beacon or UHR parameters. The operations include evaluating available resources including memory and dedicated hardware. The operations include calculating potential gain for each of a plurality of features using the received OBSS load parameters. The operations include selecting features to enable based on calculated gains and available resources when resource constraints apply. The operations include requesting feature enablement from the access point.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1A is a diagram of an example network environment.
FIGS. 1B-1C are diagrams of example components of a computing device in a wireless local area network (WLAN).
FIG. 2 is a flowchart of a method for NPCA primary channel contention window size determination, according to an embodiment of the present disclosure.
FIG. 3 is a flowchart of a method for NPCA exception handling in overlapping BSS scenarios, according to an embodiment of the present disclosure.
FIG. 4 is a flowchart of a method for NPCA gain guidance enabling feature enablement decisions, according to an embodiment of the present disclosure.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The following materials are referenced herein for various purposes, such as for background and/or explanatory purposes, among other examples: Wi-Fi^{®} Alliance certification programs, Wi-Fi CERTIFIED^{™} specifications, Wi-Fi^{®} interoperability requirements, and the Institute of Electrical and Electronics Engineers (IEEE^{®}) 802.11 standards, including, but not limited to, 802.11^{™}, 802.11a^{™}, 802.11b^{™}, 802.11g^{™}, 802.11n^{™}, 802.11ac^{™}, 802.11ax^{™}, 802.11be^{™}, 802.11ad^{™}, 802.11ay^{™}, 802.11af^{™}, 802.11ah^{™}, 802.11ai^{™}, 802.11aj^{™}, 802.11ak^{™}, 802.11aq^{™}, 802.11ba^{™}, 802.11c^{™}, 802.11d^{™}, 802.11e^{™}, 802.11f^{™}, 802.11h^{™}, 802.11i^{™}, 802.11j^{™}, and 802.11p^{™}. These materials are incorporated herein by reference in their entirety for all purposes. Although aspects of the materials may be referenced herein, the present disclosure is not limited to any particular aspects of the materials, and may be applied in various use cases, such as cloud computing systems, multimedia streaming systems, and/or vehicle communication systems, such as vehicle-to-everything (V2X) communication systems (e.g., using dedicated short-range communication (DSRC), as defined by IEEE 802.11p and standardized under the wireless access in vehicular environments (WAVE) architecture, and/or cellular V2X (C-V2X), as defined by the 3rd Generation Partnership Project (3GPP) in Release 14 and subsequent releases, which may enable communication between ground-based, aerial-based, and/or maritime-based vehicles), and/or intelligent transport systems (ITS) (e.g., associated with integrated traffic management), among other examples.

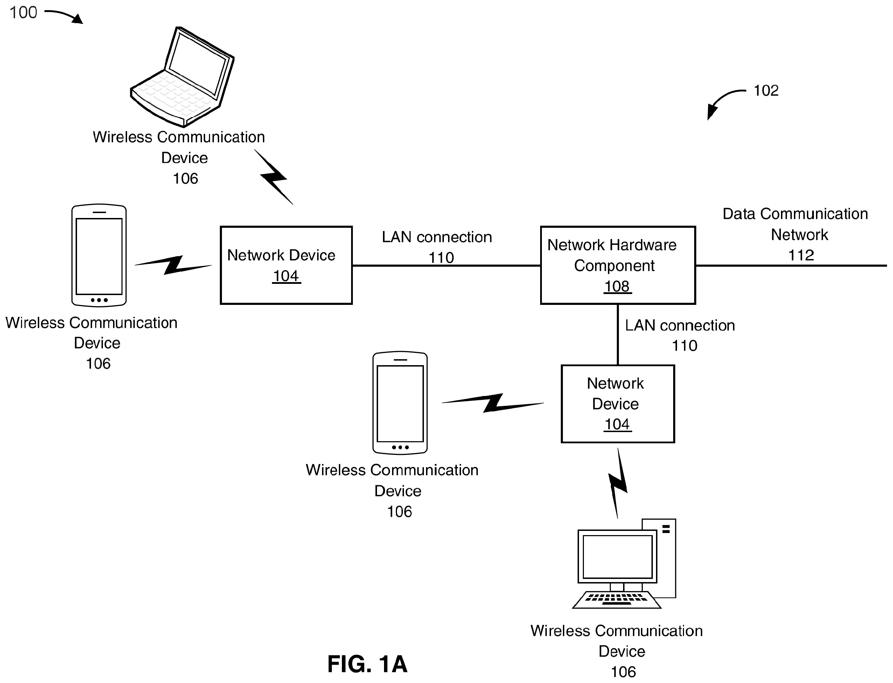

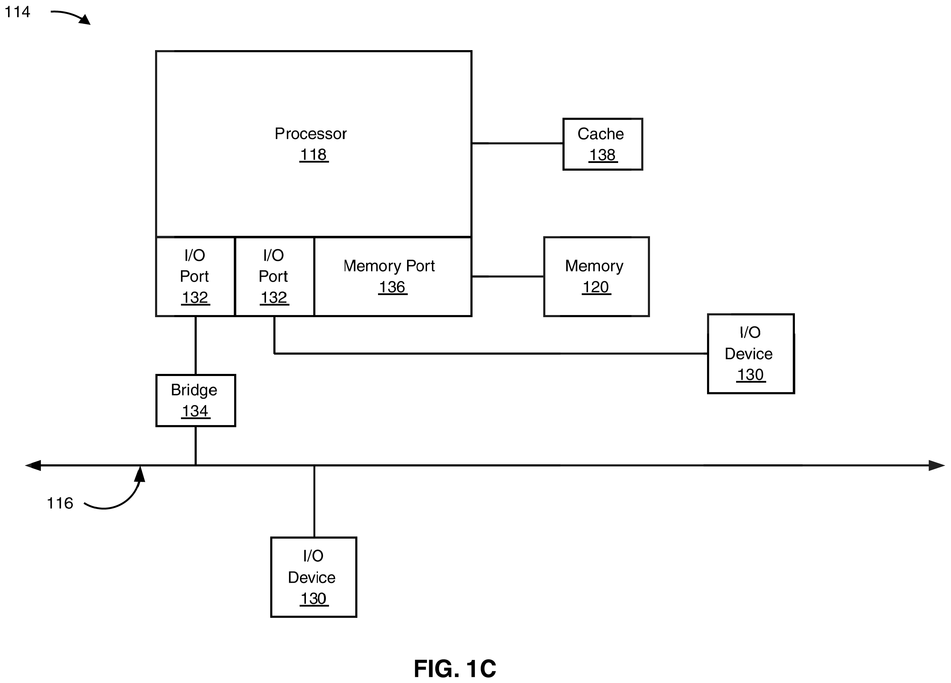

FIG. 1A is a diagram of an example environment (e.g., an example network environment 100) in which systems and/or methods described herein may be implemented. As shown in FIG. 1A, the network environment 100 includes a wireless communication system 102. In some implementations, the wireless communication system 102 may include devices and/or components that facilitate data transmission and/or connectivity via a network (e.g., a wired and/or a wireless network). For example, the wireless communication system 102 may include a network device (e.g., an access point (AP)), a wireless communication device (e.g., a station (STA)), and a network hardware component (e.g., a node), which may be implemented in connection with cloud computing systems, multimedia streaming platforms, and/or vehicle communication systems (e.g., in association with V2X and/or ITS infrastructure supporting ground-based, aerial-based, and/or maritime-based vehicles), among other examples.

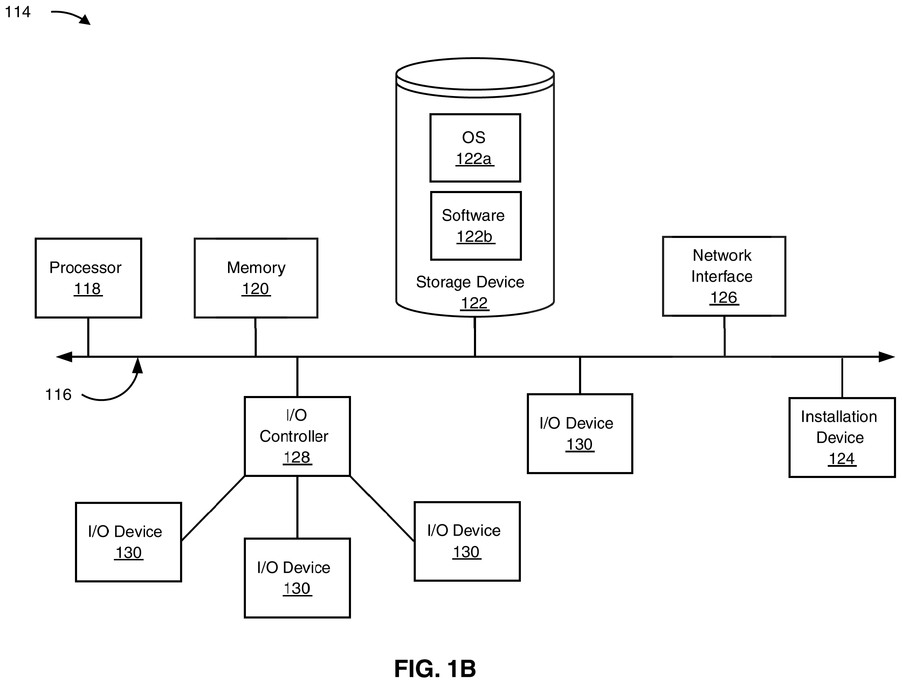

Communication among the network device, the wireless communication device, and/or the network hardware component may be enabled via a network (e.g., a wired and/or a wireless network connection). The network device, the wireless communication device, and the network hardware component are depicted and described in more detail in connection with FIGS. 1B-1C and/or as described in more detail elsewhere herein.

In some implementations, the network may include any type and/or form of network. As an example, the network may include a point-to-point network, a broadcast network, a telecommunications network, a data communication network, a computer network, a V2X communication network (e.g., using DSRC and/or C-V2X), and/or an ITS network architecture. The network may use any suitable topology (e.g., a bus, a star, and/or a ring topology) and/or support cloud computing systems, multimedia streaming systems, and/or vehicle communication systems (e.g., associated with ground-based, aerial-based, and/or maritime-based vehicles), among other examples. Accordingly, the network may be any suitable configuration capable of supporting the systems and methods described herein.

In some implementations, the network may include various types of wired and/or wireless networks, such as a wireless wide area network (WAN) (e.g., a cellular network or a public land mobile network), a local area network (LAN) (e.g., a wired LAN or a wireless local area network (WLAN), such as a Wi-Fi^{®} network), a wireless personal area network (WPAN) (e.g., a Bluetooth^{®} network), a near-field communication network, a Zigbee^{®} network, a long range wide area network (LoRaWAN^{®}), an ultra-wideband (UWB) network, a WiMAX^{®} network, a satellite network, a telephone network, a private network, the Internet, and/or V2X-related communication frameworks (e.g., DSRC, C-V2X, V2I, and/or ITS). Different types of data may be transmitted using different protocols (or the same type of data using multiple protocols), such as protocols optimized for cloud computing, multimedia streaming, and/or vehicle-based communication, among other examples.

The network device may include an antenna, or antenna array, to communicate with the wireless communication device (e.g., within a coverage area of the network device). In some implementations, the network device may include one or more devices, such as Wi-Fi^{®} APs that facilitate WLANs and/or cellular base stations (e.g., fifth generation (5G) base stations) that provide connectivity, such as for cloud services, multimedia platforms, and/or vehicle communication systems (e.g., V2X and/or ITS), among other examples.

In some implementations, IEEE 802.11-based vehicular wireless technologies (e.g., IEEE 802.11p for DSRC) may be used to support V2X communication over WLANs, while cellular base stations may support V2X communication using C-V2X protocols (e.g., defined by 3GPP Release 14 and beyond). For example, the network device may be deployed in vehicles and/or infrastructure to support data exchange and connectivity in association with cloud computing systems, multimedia streaming systems, and/or vehicle communication systems (e.g., V2X and/or ITS infrastructures associated with ground-based, aerial-based, and/or maritime-based vehicles). The network device may enable wireless connectivity for the wireless communication device by managing data transmission and enabling communication within a respective network environment (e.g., associated with cloud services, multimedia delivery, and/or V2X systems, among other examples).

In some implementations, the network device may enable the wireless communication device to connect to a wired network using standards, such as Wi-Fi^{®} and/or IEEE 802.11 standards. The network device may be implemented (e.g., configured, designed, and/or built) for WLAN environments and/or support applications, such as cloud synchronization, multimedia streaming, vehicle diagnostics, and/or infotainment updates via wireless connectivity (e.g., associated with cloud platforms, multimedia content distribution systems, and/or vehicle communication infrastructures), among other examples.

In some implementations, the network device may connect to a router (e.g., via a wired network) as a standalone device or may be integrated within a router. The network device may provide multiple wireless communication devices with network access. The network device may utilize radio frequency (RF) links to provide wireless access to a wired Ethernet connection. The network device may support IEEE standards and/or extend Wi-Fi^{®} coverage in mobile environments, such as in association with ground-based, aerial-based, and/or maritime-based vehicles, and may also support public Internet hotspots and/or Wi-Fi^{®} signal extension, among other examples.

In some implementations, the network device may be used for wireless networking in various environments (e.g., in-home, in-vehicle, and/or in-building environments) using protocols, such as IEEE 802.11, Bluetooth, ZigBee, and/or other RF-based protocols. Wireless networks may be implemented in cloud-based architectures, multimedia streaming systems, and/or integrated into vehicle systems (e.g., associated with ground-based, aerial-based, and/or maritime-based vehicles). The wireless communication device may include and/or may be operably coupled to a radio. The network device and the wireless communication device may enable broadband applications, including cloud data access and low-latency streaming, and/or may function as client nodes accessing networked resources.

The wireless communication device may include one or more devices, such as smartphones, laptops, tablets, internet-of-things (IoT) devices, automotive telematic devices, and/or on-board vehicle systems that connect to network devices (e.g., APs or base stations). The wireless communication devices may support V2X communication via DSRC (e.g., IEEE 802.11p) and/or C-V2X protocols (e.g., for safety messaging, telemetry, and/or control signals). The wireless communication devices may operate in mobile ad hoc networks and/or may communicate with infrastructure nodes (e.g., roadside units) to support applications, such as collision avoidance, cooperative driving, and/or traffic management, among other examples. The wireless communication devices may support cloud computing systems, multimedia streaming, and/or vehicle-based communication, among other examples.

The network hardware component may include one or more devices, such as routers, gateways, switches, and/or other networking elements that enable wired or wireless connectivity in LAN environments and/or between devices (e.g., network devices and wireless communication devices) in environments, such as cloud computing systems, multimedia streaming infrastructures, and/or vehicle communication networks (e.g., V2X and/or ITS). The network hardware components may manage network routing, traffic, and/or communication integrity, among other examples.

In some implementations, the wireless communication device may register with a network device to receive services from the wireless communication system 102 (e.g., via SU-MIMO or MU-MIMO). For example, the wireless communication devices may establish direct (point-to-point) connections using appropriate channels and protocols. As another example, the wireless communication devices may be mobile (e.g., ground-based, aerial-based, and/or maritime-based) and/or relatively static with respect to the network device.

The network devices and/or the wireless communication devices may be implemented on any type of computing platform, such as a computer, a network appliance, and/or another system capable of network communication and/or operations described herein (e.g., in connection with cloud computing, multimedia streaming, and/or vehicle communication, among other examples).

As further shown in FIG. 1A, the network environment 100 includes network devices 104 (e.g., APs), wireless communication devices 106 (e.g., STAs), and a network hardware component 108 (e.g., a node). The network hardware component 108 may provide connectivity (e.g., via LAN connections 110 and a data communication network 112), such as to provide support for cloud services, multimedia delivery, and/or vehicle communication systems (e.g., associated with ground-based, aerial-based, and/or maritime-based vehicles), among other examples.

The number and arrangement of devices and networks shown in FIG. 1A are provided as an example. In practice, there may be additional devices and/or networks, fewer devices and/or networks, different devices and/or networks, or differently arranged devices and/or networks than those shown in FIG. 1A. Furthermore, two ormore devices shown in FIG. 1A may be implemented within a single device, or a single device shown in FIG. 1A may be implemented as multiple, distributed devices. Additionally, or alternatively, a set of devices (e.g., one or more devices) of the network environment 100 may perform one or more functions described as being performed by another set of devices of the network environment 100.

FIGS. 1B-1C are diagrams of an example computing device 114, as described herein. The computing device 114 may correspond to a network device (e.g., the network devices 104), a wireless communication device (e.g., the wireless communication devices 106), and/or a network hardware component (e.g., the network hardware component 108). In some implementations, a network device (e.g., the network devices 104), a wireless communication device (e.g., the wireless communication devices 106), and/or a network hardware component (e.g., the network hardware component 108) may include the computing device 114, such as in association with cloud computing systems, multimedia streaming systems, and/or vehicle communication systems, among other examples.

As shown in FIGS. 1B-1C, the computing device 114 includes a bus 116 (e.g., a system bus), a processor 118 (e.g., a CPU), a memory 120 (e.g., a main memory), a storage device 122, an installation device 124, a network interface 126, an input/output (I/O) controller 128, I/O devices 130, an I/O port (e.g., shown as I/O ports 132), a bridge 134, a memory port 136, and a cache 138. In some implementations, the computing device 114 may be configured to support applications and/or services, such as cloud computing systems, multimedia streaming systems, and/or vehicle communication systems, among other examples.

The bus 116 may include one or more components that enable wired and/or wireless communication among the components of the computing device 114. The bus 116 may couple together two or more components of FIGS. 1B-1C, such as via operative coupling, communicative coupling, electronic coupling, and/or electric coupling. For example, the bus 116 may include an electrical connection (e.g., a wire, a trace, and/or a lead, among other examples) and/or a wireless bus. Furthermore, when an element is referred to herein as being "connected" or "coupled" to another element, it should be understood that the elements may be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

The processor 118 may include a central processing unit (CPU), a graphics processing unit (GPU), a microprocessor, a controller, a microcontroller, a digital signal processor, a field-programmable gate array (FPGA), an application-specific integrated circuit (ASIC), and/or another type of processing component and/or circuitry. The processor 118 may be implemented in hardware, software, and/or a combination of hardware and software. In some implementations, the processor 118 may include one or more processors capable of being programmed to perform one or more operations or processes as described herein.

The memory 120 may include volatile and/or nonvolatile memory. For example, the memory 120 may include random access memory (RAM), read-only memory (ROM), a hard disk drive, and/or another type of memory (e.g., a flash memory, a magnetic memory, and/or an optical memory). The memory 120 may include internal memory (e.g., RAM, ROM, or a hard disk drive) and/or removable memory (e.g., removable via a universal serial bus (USB) connection). The memory 120 may be a non-transitory computer-readable medium. The memory 120 may store information, one or more instructions, and/or software (e.g., one or more software applications) related to the operation of the computing device 114. For example, the memory 120 may store information associated with supporting cloud computing systems, multimedia streaming systems, and/or vehicle communication systems, among other examples.

In some implementations, the memory 120 may include one or more memories that are coupled (e.g., communicatively coupled) to one or more processors (e.g., the processor 118), such as via a bus (e.g., the bus 116). Communicative coupling between the processor 118 and the memory 120 may enable the processor 118 to read and/or process information stored in the memory 120 and/or to store information in the memory 120.

In some implementations, the memory 120 may include one or more memory chips capable of storing data and/or allowing a storage location to be accessed (e.g., directly accessed) by the processor 118, such as any type or variant of static random-access memory (SRAM), dynamic random-access memory (DRAM), ferroelectric RAM (FRAM), not-and (NAND) flash memory, not-or (NOR) flash memory, and/or solid state drives (SSDs). The memory 120 may be based on any suitable memory chips capable of operating as described herein. As shown in FIG. 1B, the processor 118 may communicate with the memory 120 via the bus 116, as described in more detail elsewhere herein. As further shown in FIG. 1B, the storage device 122 may include an operating system (OS) 122a and software 122b.

In some implementations, the processor 118 may communicate directly with the cache 138 (e.g., via a secondary bus, which is sometimes referred to as a backside bus). In some implementations, the processor 118 may communicate with the cache 138 using the bus 116. In some implementations, the cache 138 may be provided by SRAM, block static random-access memory (BSRAM,) and/or embedded dynamic random-access memory (EDRAM). In some implementations, the processor 118 may communicate with the I/O devices 130 via the bus 116. Various buses may be used to connect the processor 118 to any of the I/O devices 130, such as a video electronics standards association (VESA) local bus (VESA VL), an industry standard architecture (ISA) bus, an extended industry standard architecture (EISA) bus, a microchannel architecture (MCA) bus, a peripheral component interconnect extended (PCI) bus, a peripheral component interconnect extended (PCI-X) bus, a PCI-Express (PCle) bus, and/or a NuBus.

In some implementations, the I/O devices 130 may include a display device such as a video display, and the processor 118 may use an advanced graphics port (AGP) to communicate with the video display. In some implementations, the processor 118 may communicate directly with the I/O devices 130 (e.g., via HYPERTRANSPORT, RAPIDIO, or INFINIBAND communications technology). In some implementations, local buses and/or direct communication may be utilized (e.g., the processor 118 may communicate with the I/O devices 130 using a local interconnect bus and/or directly).

The I/O devices 130 may include one or more input devices that enable the computing device 114 to receive input, such as user input and/or sensed input. For example, the input devices may include one or more touch screens, keyboards, keypads, mice, trackpads, trackballs, dials, touch pads, drawing tablets, buttons, microphones, switches, sensors, global positioning system (GPS) sensors, accelerometers, gyroscopes, and/or actuators, among other examples.

The I/O devices 130 may include one or more output devices that enable the computing device 114 to provide output. For example, the I/O devices 130 may include one or more video displays, speakers, inkjet printers, laser printers, projectors, dye-sublimation printers, and/or light-emitting diodes (LEDs), among other examples.

An I/O controller (e.g., the I/O controller 128) may control the I/O devices 130. For example, the I/O controller 128 may control one or more keyboards and/or pointing device (e.g., mice and/or optical pens), among other examples. Furthermore, an I/O device (e.g., of the I/O devices 130) may provide storage and/or an installation medium for the computing device 114. In some implementations, the computing device 114 may provide universal serial bus (USB) connections to receive handheld USB storage devices.

The installation device 124 may be any suitable device, such as a disk drive, a CD-ROM drive, a CD-R/RW drive, a DVD-ROM drive, a flash memory drive, a tape drive (e.g., one or more tape drives of various formats), a USB device, a hard-drive, a network interface, and/or any other device suitable for installing software (e.g., the software 122b) and/or programs. In some implementations, the computing device 114 may include a storage device, such as one or more hard disk drives and/or redundant arrays of independent disks, for storing an operating system (OS) (e.g., the OS 122a) and/or other software, and/or for storing application software programs, such as any program or software for implementing (e.g., configured and/or designed for) the systems and methods described herein. Additionally, or alternatively, the installation device 124 may also be used as the storage device 122. Additionally, or alternatively, the OS 122a and/or the software 122b may be run from any bootable medium.

The network interface 126 may enable the computing device 114 to interface with a network via a connection, such as via telecommunication lines, LANs and/or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, and/or some combination of any or all of the above. In some implementations, connections may be established using one or more communication protocols, such as TCP/IP, IPX, SPX, NetBIOS, Ethernet, ARCNET, SONET, SDH, Fiber Distributed Data Interface (FDDI), RS232, IEEE 802.11 (including versions 802.11a, 802.11b, 802.11g, 802.11n, 802.11ac, and 802.11ad), CDMA, GSM, WiMax, and/or direct asynchronous connections.

In some implementations, the computing device 114 may communicate with other computing devices via any type and/or form of gateway and/or tunneling protocol, such as a secure socket layer (SSL) protocol and/or a transport layer security (TLS) protocol. The network interface 126 may include a network adapter (e.g., a built-in network adapter), a network interface card, a personal computer memory card international association (PCMCIA) network card, a card bus network adapter, a wireless network adapter, a USB network adapter, a modem, and/or or any other device suitable for interfacing the computing device 114 to any type of network capable of communicating and/or performing the operations as described herein.

In some implementations, the computing device 114 may include, or be connected to, one or more display devices (e.g., the I/O devices 130 may include one or more display devices). Accordingly, the I/O devices 130 and/or the I/O controller 128 may include any type and/or form of suitable hardware, software, or combination of hardware and software to support, enable, and/or provide for the connection and use of the one or more display devices by the computing device 114. For example, the computing device 114 may include any type and/or form of video adapter, video card, driver, and/or library to interface, communicate, connect, and/or otherwise use the one or more display devices.

In some implementations, a video adapter may include multiple connectors to interface to the one or more display devices. In some implementations, the computing device 114 may include multiple video adapters, with each video adapter connected to the one or more display devices. In some implementations, any portion of the OS 122a of the computing device 114 may be configured for using multiple display devices. In some implementations, an I/O device (e.g., of the I/O devices 130) may be a bridge between the bus 116 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an asynchronous transfer mode bus, a FibreChannel bus, a fiber optic bus, a serial attached small computer system interface bus, a USB connection, and/or an HDMI bus.

In some implementations, an OS (e.g., the OS 122a) may control the computing device 114. For example, the OS may control scheduling oftasks and/or access to resources (e.g., system resources). The computing device 114 may run any suitable OS, such as any suitable version of MICROSOFT WINDOWS OSs, Unix OSs, Linux OSs, MAC OSs (e.g., for Macintosh computers), any embedded operating system, any real-time operating system, any open source operating system, any proprietary operating system, any operating systems for mobile computing devices, and/or any other operating system capable of running on the computing device 114 and performing the operations described herein.

In some implementations, the computing device 114 may be any type of computing, telecommunications, and/or media device (e.g., including one or more processors, memories, OSs, and/or I/O devices, among other examples) capable of communication and that has sufficient processor power and memory capacity to perform the operations described herein. For example, the computing device 114 may be a workstation, a telephone, a desktop computer, a laptop, a server, a handheld computer, a mobile phone, a tablet, a personal digital assistant (PDA), a media player, a gaming system, and/or a mobile computing device, such as one used in connection with cloud computing systems, multimedia streaming systems, and/or vehicle communication systems, among other examples.

In some implementations, the computing device 114 may perform one or more operations or processes described herein. For example, a non-transitory computer-readable medium (e.g., the memory 120) may store a set of instructions (e.g., one or more instructions or code) for execution by the processor 118. The processor 118 may execute the set of instructions to perform one or more operations or processes described herein. In some implementations, execution of the set of instructions, by one or more processors (e.g., the processor 118), causes the one or more of the processors and/or the computing device 114 to perform one or more operations or processes described herein. In some implementations, hardwired circuitry may be used instead of or in combination with the instructions to perform one or more operations or processes described herein. Additionally, or alternatively, the processor 118 may perform one or more operations or processes described herein. Thus, implementations described herein are not limited to any specific combination of hardware circuitry and software (e.g., associated with cloud computing systems, multimedia streaming systems, and/or vehicle communication systems, among other examples).

The number and arrangement of components shown in FIGS. 1B-1C are provided as an example. The computing device 114 may include additional components, fewer components, different components, or differently arranged components than those shown in FIGS. 1B-1C. Additionally, or alternatively, a set of components (e.g., one or more components) of the computing device 114 may perform one or more functions described as being performed by another set of components of the computing device 114.

Aspects of the example environment and the example device described above will become apparent in the context of the systems and methods disclosed herein.

Wireless communication systems, such as those operating according to IEEE 802.11 standards (Wi-Fi), may utilize multiple channels across a bandwidth for data transmission. In such systems, a primary channel serves as an anchor channel on which devices contend for channel access. When operating bandwidths exceed 20 MHz, additional channels beyond the primary channel are designated as secondary channels. Conventionally, a device may transmit on the primary channel and available secondary channels when the primary channel is idle, but the device may not transmit when the primary channel is occupied by another transmission, even if secondary channels remain idle.

Non-primary channel access (NPCA) is a feature that enables a device to use a secondary channel (referred to as an NPCA primary channel) when the primary channel is occupied by an overlapping basic service set (OBSS) transmission. NPCA may provide throughput gains by allowing devices to transmit on the NPCA primary channel during periods when the primary channel would otherwise be unavailable. When NPCA operation is enabled in a basic service set (BSS), an NPCA-capable device may switch to the NPCA primary channel upon detecting an OBSS physical layer protocol data unit (PPDU) or upon detecting an OBSS control frame exchange, either of which may indicate that the medium is occupied for a certain bandwidth and duration.

The present disclosure addresses technical challenges associated with NPCA operation. A first challenge relates to contention window (CW) size determination for channel access on the NPCA primary channel. When an NPCA transmitter contends for channel access on the NPCA primary channel using enhanced distributed channel access (EDCA), the contention window size governs the range of random numbers from which the device draws a backoff value. The contention window size may affect fairness among devices, collision rates, and transmission efficiency on the NPCA primary channel. Various approaches for deriving an initial contention window size upon starting channel access on the NPCA primary channel are described herein.

A second challenge relates to exception handling in overlapping BSS scenarios. In certain multiple access point (AP) deployments, such as residential mesh networks or enterprise networks, APs may communicate with each other wirelessly over a backhaul link that shares the same radio as a fronthaul link over which each AP communicates with associated stations (STAs). In such scenarios, STA devices on the fronthaul may detect or classify backhaul communication between their associated AP and another AP as OBSS frames, since these frames may have BSS color values or MAC addresses different from those of the STA's BSS. Similarly, when a non-AP device is associated with an infrastructure AP while also hosting a peer-to-peer (P2P) connection with another device, the infrastructure AP or the P2P peer may incorrectly classify ongoing transmissions as OBSS. If NPCA-capable devices attempt NPCA transmissions based on such incorrect classifications, the devices may transmit to peers that are unavailable, causing disruption and wasted resources. Exception handling methods or mechanisms based on BSS color rules and MAC address rules are described herein to address such scenarios.

A third challenge relates to gain guidance for feature enablement decisions in resource-constrained non-AP devices. Non-AP implementations may have constraints regarding resources such as memory and dedicated hardware that are used to enable various features including NPCA, enhanced multi-link single radio (EMLSR) operation, dynamic subchannel operation (DSO), and dynamic power save (DPS). Because not all non-AP implementations can enable all features simultaneously, non-AP devices may benefit from guidance regarding which features provide gains under current network conditions. An AP may advertise OBSS load parameters or other gain indicators to enable non-AP devices to make informed decisions regarding which features to enable based on available resources and expected throughput gains.

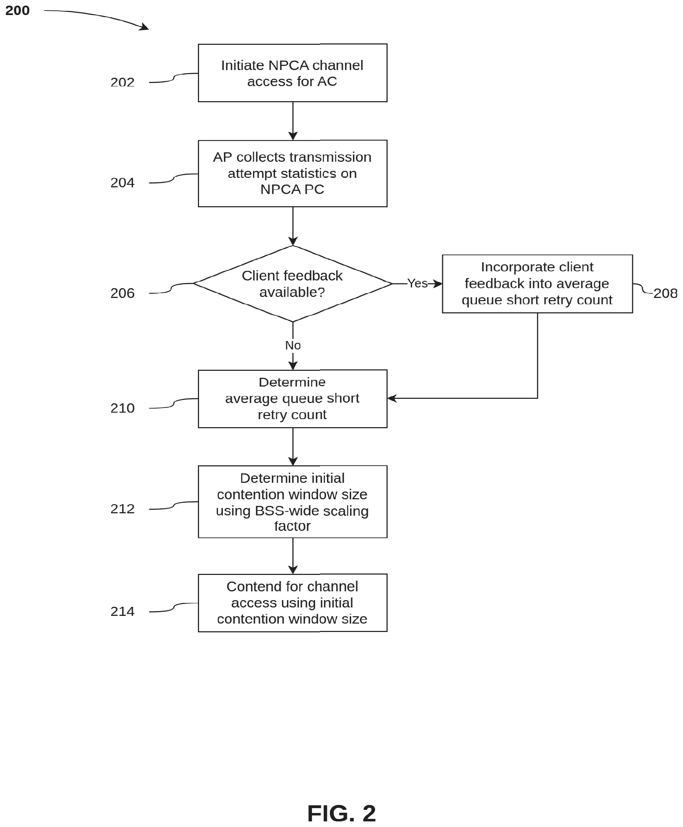

Referring to FIG. 2, a method 200 for NPCA primary channel contention window size determination is illustrated. Method 200 enables an NPCA-capable device to determine an appropriate initial contention window size when contending for channel access on the NPCA primary channel. The contention window size defines the range of random numbers (from zero to the contention window size) from which a device draws a backoff value before attempting transmission. By selecting an appropriate initial contention window size, method 200 may reduce collisions and improve transmission efficiency on the NPCA primary channel.

Method 200 includes a step 202 of initiating NPCA channel access for an access category (AC). Access categories in EDCA include voice (AC_VO), video (AC_VI), best effort (AC_BE), and background (AC_BK), each having different contention window parameters to provide varying degrees of priority. The contention window parameters may vary by access category with different ranges. For voice, for example, CWmin may be 3 and CWmax may be 7. For video, for example, CWmin may be 7 and CWmax may be 15. For best effort, for example, CWmin may be 15 and CWmax may be 63 or 1023. These different ranges provide varying degrees of controllability for each access category, with best effort having a much larger range than voice or video.

With continued reference to FIG. 2, at a step 204, an AP collects transmission attempt statistics on the NPCA primary channel. The AP may track the number of transmission attempts made on the NPCA primary channel (PC) before successfully transmitting a packet for each access category. These statistics may be used to derive a BSS-wide scaling factor for the initial contention window size.

At a decision 206, method 200 determines whether client feedback is available. Client feedback may include the average number of transmission attempts on the NPCA primary channel for each access category before successfully transmitting a packet. The AP may receive periodic feedback from clients containing such transmission attempt statistics. If client feedback is available (Yes branch from decision 206), method 200 proceeds to a step 208 where the client feedback is incorporated into the average queue short retry count (Avg_QSRC_NPCA) determination. The AP may use client feedback in addition to the AP's own transmission attempt statistics while determining the Avg_QSRC_NPCA value. If client feedback is not available (No branch from decision 206), method 200 proceeds directly to a step 210.

As used herein, the term "short retry count" or "queue short retry count," which may also be understood as "the retry count," may refer to a count of transmission attempts made by a device before successfully transmitting a packet. In some aspects, the short retry count may encompass various retry counting mechanisms, including but not limited to short retry counters as defined in IEEE 802.11 standards. In some cases, the short retry count may track the number of times a device attempts to transmit a frame before receiving an acknowledgment or before the frame is successfully delivered. The term may broadly refer to any metric or counter that indicates the number of transmission attempts associated with packet delivery on a channel, and may be calculated on a per-access-category basis or across multiple access categories.

At step 210, method 200 determines Avg_QSRC_NPCA based on available statistics. The Avg_QSRC_NPCA value represents the average number of transmission attempts on the NPCA primary channel before successfully transmitting a packet. The scaling factor may be specific to each access category, allowing different scaling for voice, video, best effort, and background traffic based on individual congestion characteristics experienced by each access category. If a certain access category is missing from the set of traffic identifiers (TIDs) in use in the BSS or is sparse, the AP may disregard that access category while calculating the Avg_QSRC_NPCA value.

As further shown in FIG. 2, at a step 212, method 200 determines the initial contention window size (CW_init) using a BSS-wide scaling factor derived from Avg_QSRC_NPCA. The AP may determines the scaling factor using the formula: $CW _ init = min \left({2}^{∧}Avg_QSRC_NPCA\left[AC\right]\times \left(CWmin\left[AC\right]+1\right)-1, CWmax\left[AC\right]\right) ,$
where Avg_QSRC_NPCA[AC] is the average number of transmission attempts on the NPCA primary channel for that access category before successfully transmitting a packet. The formula scales the CWmin value by a factor based on the average number of transmission attempts, while limiting the result to CWmax for the corresponding access category.

At a step 214, the device contends for channel access on the NPCA primary channel using the calculated CW_init value. The device draws a random backoff value from the range of zero to CW_init and waits for that number of slot times (plus a constant interframe spacing) before transmitting.

In addition to the BSS-wide scaling approach described above with respect to steps 204 through 212, method 200 may employ alternative approaches for determining the initial contention window size. Additionally or alternatively, the initial contention window size for the NPCA primary channel may be set to the CWmin value for the corresponding access category. This approach represents a basic approach where the device starts with the minimum contention window regardless of prior channel conditions on either the BSS primary channel or the NPCA primary channel.

Additionally or alternatively, the initial contention window size may be set to the current value of the contention window for that access category on the BSS primary channel. This approach allows the NPCA primary channel to inherit the congestion state from the BSS primary channel, based on an assumption that congestion conditions on the BSS primary channel may correlate with congestion conditions on the NPCA primary channel.

Additionally or alternatively, the initial contention window size may be set to the last used value of the contention window for that access category on the NPCA primary channel. This approach provides memory of previous NPCA primary channel conditions. However, if a time greater than a threshold value T_cw_memory has elapsed since the last transmission on the NPCA primary channel as a result of winning channel access, the contention window value may be reset to CWmin for the corresponding access category. The reset to CWmin avoids long-term memory effects that may no longer reflect current channel conditions.

The NPCA assistance information that a client provides to the AP may be augmented to include contention window size determination feedback. Such feedback may include the average number of transmission attempts on the NPCA primary channel for each access category before successfully transmitting a packet. The AP may use this feedback in combination with NPCA primary channel determination information to calculate appropriate BSS-wide scaling factors for contention window size determination.

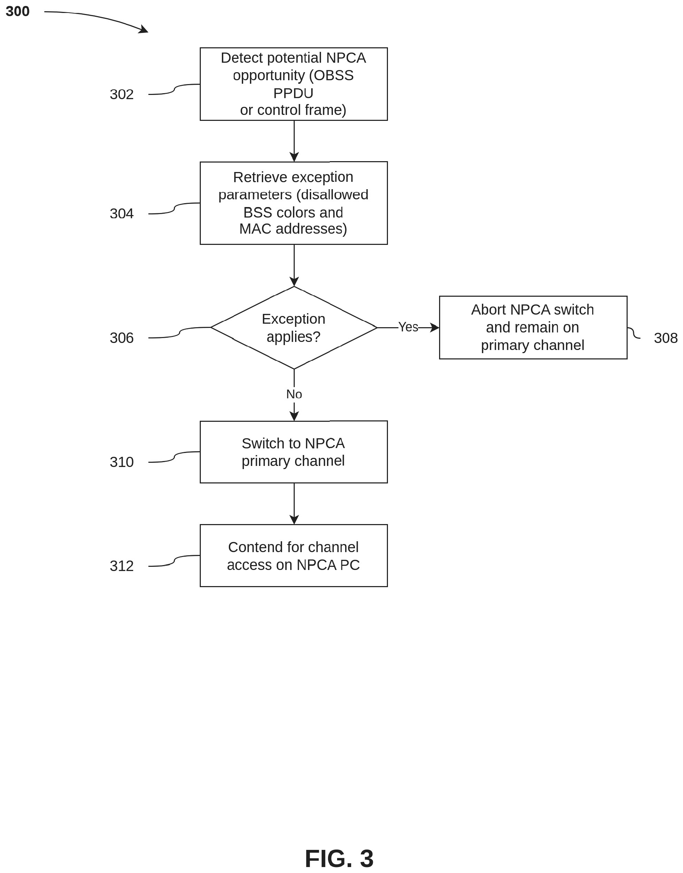

Referring to FIG. 3, a method 300 for NPCA exception handling in overlapping BSS scenarios is shown. Method 300 enables an NPCA-capable device to avoid inappropriate NPCA transmissions when the device's peer is engaged in communication that has been incorrectly classified as OBSS. Such scenarios may arise in mesh network deployments where one AP acts as a repeater and is associated with a root AP as a client, with the backhaul and fronthaul communication sharing the same PHY/radio. Such scenarios may also arise when a non-AP device is associated with an infrastructure AP while also hosting a P2P connection with a peer on the same channel.

Method 300 includes a step 302 of detecting a potential NPCA opportunity based on an OBSS PPDU or control frame exchange. The detection of a high efficiency (HE)/extremely high throughput (EHT)/ultra-high reliability (UHR) OBSS PPDU may be based on a BSS color indicated in a preamble of the PPDU being different from zero and different from the BSS color of the device's BSS. The detection may also be based on an uplink (UL)/downlink (DL) field in the preamble of the PPDU, where an AP seeing a downlink packet that the AP is not transmitting may conclude that the packet is from an OBSS. The detection of an OBSS control frame exchange may be based on indicated MAC addresses in the frames not matching the BSSID of the device's BSS or any of the BSSIDs of a co-hosted or multiple BSSID set of which the device's BSS is a member. Control frame exchanges that may trigger NPCA opportunity detection include request-to-send/clear-to-send (RTS/CTS) exchanges, multi-user RTS/CTS exchanges, and buffer status report poll/multi-band acknowledgment (BSRP/MBA) exchanges.

With continued reference to FIG. 3, at a step 304, method 300 obtains or retrieves exception parameters including disallowed BSS colors and MAC addresses. The exception parameters may include BSS colors that have been pre-negotiated for inter-AP communication or P2P communication, as well as MAC addresses indicated by APs or P2P participants that should not trigger NPCA transmissions even though the MAC addresses would normally qualify as OBSS.

A pair of APs may pre-negotiate a special BSS color to be used for inter-AP communication among the two APs. STAs of each AP may be notified of the special BSS color, and NPCA may be disallowed for HE/EHT/UHR PPDUs that signal the special BSS color. Similarly, a client may negotiate a BSS color for P2P communication that is different from an infrastructure BSS color, while the infrastructure BSS color is indicated to the peer of the client.

BSS color 0 may be used for all inter-AP communication, and STAs associated to an AP may be disallowed from performing NPCA over HE/EHT/UHR PPDUs with BSS color 0. However, using BSS color 0 for inter-AP communication may prevent NPCA not only from intended clients but also from other BSSs. To address this limitation, an additional field may be added to a PHY header containing a complete or reduced value of the BSS color of the BSS whose STAs are intended to be prevented from performing NPCA. Devices may examine the additional field to determine whether the device should refrain from NPCA based on the indicated BSS color.

At a decision 306, method 300 determines whether an exception applies by checking if a detected BSS color or MAC address matches the exception parameters. The BSS color rules may be applied even if HE/EHT/UHR PPDUs are preceded by an OBSS control frame exchange determined based on MAC addresses. Even if MAC addresses result in classification of a transmission opportunity (TXOP) as OBSS, a subsequent PPDU with a disallowed BSS color may cause the NPCA device to abort the NPCA switch. The BSS color rules may thus override MAC-based OBSS classification when a disallowed BSS color is detected.

Specific MAC addresses may be indicated by APs or P2P participants which, even though the MAC addresses would normally qualify as OBSS, should not be used to initiate NPCA transmissions. When an NPCA device makes a switch to the NPCA primary channel based on detecting an initial control frame exchange involving an OBSS, the NPCA device may check whether the MAC addresses in the control frames match the indicated exception MAC addresses. If the MAC addresses match the exception list, the NPCA device may desist from the NPCA switch.

As further shown in FIG. 3, if an exception applies (Yes branch from decision 306), method 300 proceeds to a step 308 where the NPCA switch is aborted and the device remains on the primary channel. By aborting the NPCA switch, the device avoids transmitting to a peer that is already engaged in another communication, thereby preventing disruption to backhaul communication or P2P communication and avoiding wasted resources and energy at the device.

If no exception applies (No branch from decision 306), method 300 proceeds to a step 310 where the device switches to the NPCA primary channel. At a step 312, the device contends for channel access on the NPCA primary channel using EDCA procedures.

When P2P communication is active on the primary channel between a non-AP device and a P2P peer, an AP associated with the non-AP device may refrain from transmitting to the non-AP device on the NPCA primary channel. However, the AP may transmit to other non-AP devices on the NPCA primary channel during the P2P communication. The exception handling thus allows selective NPCA operation based on which devices are engaged in communication on the primary channel.

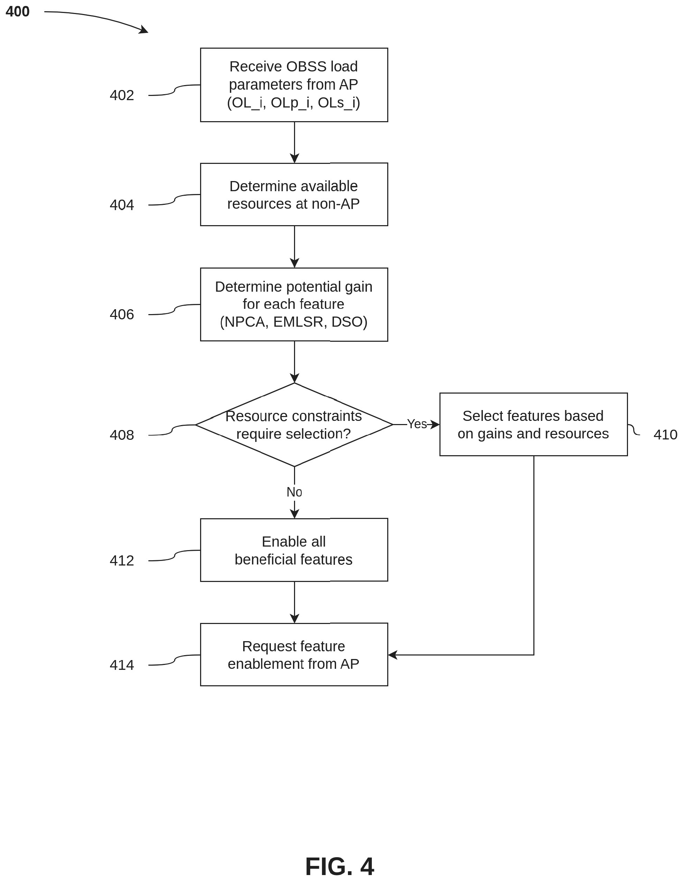

Referring to FIG. 4, a method 400 for NPCA gain guidance enabling non-APs to make informed feature enablement decisions is illustrated. Method 400 enables a non-AP device to determine which features to enable based on OBSS load parameters advertised by an AP and available resources at the non-AP device. The OBSS load parameters provide indirect indicators of potential throughput gains achievable with various features including NPCA, EMLSR, and DSO.

Method 400 includes a step 402 of receiving OBSS load parameters from an AP. The OBSS load parameters may include, for example, OL_i representing OBSS load for full bandwidth (corresponding to OBSS occupying the BSS primary channel and full bandwidth), OLp_i representing OBSS load for primary half bandwidth (corresponding to OBSS occupying the BSS primary channel and constrained to primary half bandwidth), and OLs_i representing OBSS load for secondary half bandwidth (corresponding to OBSS occupying the NPCA primary channel and constrained to secondary half bandwidth). The AP may advertise the OBSS load parameters in beacon frames or UHR parameters. The AP may track the overall load over a period of time by observing how often certain parts of the bandwidth are occupied by OBSS transmissions. Equivalent parameters such as probability of a full bandwidth transmission, probability of a primary half bandwidth transmission, or probability of a secondary half bandwidth transmission in a BSS may be advertised instead of or in addition to the OBSS load parameters to assist non-AP devices in making feature enablement decisions.

With continued reference to FIG. 4, at a step 404, the non-AP determines available resources including memory and dedicated hardware. Enablement of features such as NPCA, EMLSR, and DSO may require resources at the non-AP in the form of memory and dedicated hardware. Because of constraints regarding availability of such resources in a single non-AP implementation, the non-AP may select which features to enable rather than enabling all available features simultaneously.

At a step 406, the non-AP determines potential gain for each feature using the received OBSS load parameters. When both primary and secondary channels are idle (probability given by 1 - OL_i - OLp_i - OLs_i for a link i), the device may make a full bandwidth transmission. When the secondary channel is busy while the primary channel is idle (probability given by OLs_i), the device may make a half bandwidth transmission, contributing 0.5 × OLs_i to the throughput calculation. When the primary channel is busy (probabilities given by OL_i and OLp_i), the device may not transmit without NPCA capability.

The non-AP may calculate EMLSR throughput by combining single link throughput of a prioritized link with throughput contribution from a secondary link weighted by the probability that the prioritized link is busy. EMLSR may prioritize a better link based on comparing throughput metrics for each link. Link 1 may be designated as the prioritized link when: 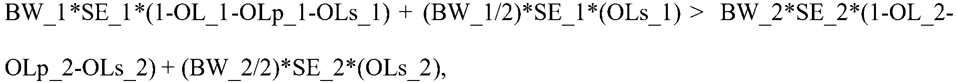 BW_1*SE_1*(1-OL_1-OLp_1-OLs_1) + (BW_1/2)*SE_1*(OLs_1) > BW_2*SE 2*(1-OL_2-OLp_2-OLs_2) + (BW_2/2)*SE_2*(OLs_2),
where SE_i represents spectral efficiency of link i. When link 1 is the prioritized link, the EMLSR throughput may be calculated as: 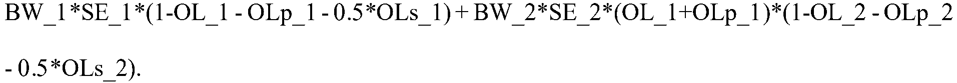 BW_1*SE_1*(1-OL_1 - OLp_1 - 0.5*OLs_1)+ BW_2*SE_2*(OL_1+OLp_1)*(1-OL _2 - OLp_2 - 0.5*OLs_2).

The formula reflects that the device obtains the full single link throughput of link 1, and when link 1 is busy (with probability OL_1 + OLp_1 ), the device may switch to link 2 and obtain throughput proportional to the single link throughput of link 2.

As further shown in FIG. 4, the non-AP may calculate NPCA throughput by adding to single link throughput the contribution from half-bandwidth transmissions during times when the primary channel is occupied while the secondary channel is idle. For link 1, the NPCA throughput may be calculated as: $BW _ 1 * SE _ 1 * \left(1-OL_1-OLp_1-0.5*OLs_1\right) + \left(BW_1/2\right) * SE _ 1 * \left(1-OLs_1\right) * OLp _ 1 .$

The additional term represents the throughput gained by transmitting on the NPCA primary channel (at half bandwidth) during the time when the primary channel is busy with primary-half-bandwidth OBSS transmissions (probability given by OLp_1) and the secondary channel is available (probability given by 1 - OLs_1).

The non-AP may calculate combined EMLSR and NPCA throughput to determine an appropriate combination of features to enable based on resource constraints. When link 1 is the prioritized link, the combined throughput may be calculated as: 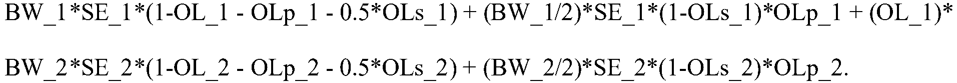 BW_1*SE_1*(1-OL_1 - OLp_1 - 0.5*OLs_1) + (BW_1/2)*SE_1*(1-OLs_1)*OLp_1 + (OL_1)* BW 2*SE 2*(1-OL_2 - OLp_2 - 0.5*OLs_2) + (BW_2/2)*SE_2*(1-OLs_2)*OLp_2.

The formula reflects that the device obtains NPCA throughput on link 1, and when link 1 is fully occupied (with probability OL_1), the device may switch to link 2 and obtain NPCA throughput on link 2.

At a decision 408, method 400 determines whether resource constraints require feature selection. Upon determining the non-AP has sufficient resources to enable all beneficial features, the non-AP may proceed to enable all features without selection. Upon determining resource constraints exist, the non-AP may select a subset of features based on determined gains.

Method 300 may also evaluate whether certain features provide benefit under current network conditions. If OL_i plus OLp_i for the better link equals zero, EMLSR may not be beneficial because the prioritized link is never busy and there is no opportunity to gain throughput from the secondary link. If OLp_i equals zero for any link, NPCA on that link may not be beneficial because there are no opportunities where the primary channel is busy while the secondary channel is idle. If OL_i for any link exceeds a threshold, DSO on that link may not be beneficial due to high overall channel occupancy that limits transmission opportunities.

Upon determining resource constraints require selection (Yes branch from decision 408), method 400 proceeds to a step 410 where the non-AP selects features to enable based on calculated gains and available resources. The non-AP may compare the calculated throughput values for different feature combinations and select the combination that provides the highest throughput gain within the available resource budget. For example, in response to the NPCA throughput exceeding EMLSR throughput for a given set of OBSS load parameters and the non-AP having resources to enable only one feature, the non-AP may select NPCA.

Upon determining no resource constraints apply (No branch from decision 408), method 400 proceeds to a step 412 where the non-AP enables all beneficial features. When resources are sufficient, the non-AP may enable NPCA, EMLSR, and DSO simultaneously to obtain the combined throughput benefits.

At a step 414, the non-AP requests feature enablement from the AP. The gain guidance method may be applied for NPCA as well as for other UHR features such as DSO and DPS that require resources to enable and whose benefits may depend on system load and network conditions.

The present disclosure describes three methods for optimizing NPCA operation in wireless communication systems. A first method addresses contention window size determination for channel access on the NPCA primary channel. The first method enables an AP to calculate a BSS-wide scaling factor based on average transmission attempt statistics collected on the NPCA primary channel. The AP may track the number of transmission attempts made before successfully transmitting a packet for each access category and may incorporate periodic feedback from clients containing similar transmission attempt statistics. The scaling factor may be applied to the CWmin value for each access category to derive an initial contention window size that reflects current congestion conditions on the NPCA primary channel. By using a BSS-wide scaling factor derived from actual transmission attempt statistics, the first method may achieve fairness among devices contending on the NPCA primary channel and may reduce collisions compared to approaches that use a fixed CWmin value regardless of channel conditions. Alternative approaches for determining the initial contention window size include using the current contention window value from the BSS primary channel or using the last used contention window value on the NPCA primary channel with a memory timeout to reset to CWmin after extended periods of inactivity.

A second method addresses exception handling for NPCA operation in overlapping BSS scenarios. The second method enables an NPCA-capable device to identify situations where a detected OBSS transmission involves a peer device that is unavailable for NPCA communication. Such situations may arise in mesh network deployments where an AP communicates with another AP over a backhaul link that shares the same radio as fronthaul communication with associated STAs. Such situations may also arise when a non-AP device maintains both an infrastructure association with an AP and a P2P connection with another device on the same channel. The second method employs BSS color rules and MAC address rules to prevent inappropriate NPCA transmissions. Under the BSS color rules, a pair of APs may pre-negotiate a special BSS color for inter-AP communication, and STAs may be notified that NPCA is disallowed for PPDUs signaling the special BSS color. Under the MAC address rules, specific MAC addresses may be indicated by APs or P2P participants as addresses that should not trigger NPCA transmissions even though the addresses would normally qualify as OBSS. When an NPCA-capable device detects a potential NPCA opportunity, the device may check whether the detected BSS color or MAC address matches the exception parameters and may abort the NPCA switch if an exception applies.

A third method addresses gain guidance for feature enablement decisions in resource-constrained non-AP devices. The third method enables an AP to advertise OBSS load parameters that indicate the probability of various channel occupancy conditions, including full bandwidth occupancy, primary half bandwidth occupancy, and secondary half bandwidth occupancy. A non-AP device may receive the OBSS load parameters and may calculate potential throughput gains for various features including NPCA, EMLSR, and DSO based on the received parameters. The non-AP device may evaluate available resources including memory and dedicated hardware and may select which features to enable based on calculated gains and resource constraints. The third method allows non-AP devices to make informed decisions about feature enablement rather than making blind choices when resources are insufficient to enable all available features simultaneously. The OBSS load parameters may be advertised in beacon frames or UHR parameters, allowing non-AP devices to obtain current network condition information without additional signaling overhead.

The contention window size determination method described herein may provide several advantages for NPCA operation. By deriving an initial contention window size based on actual transmission attempt statistics collected on the NPCA primary channel, the method may achieve improved fairness among devices contending for channel access. When all devices in a BSS use a common BSS-wide scaling factor derived from average transmission attempt statistics, the devices may start with similar contention window sizes that reflect current congestion conditions rather than arbitrary minimum values. The use of transmission attempt statistics from both the AP and client feedback may provide a more accurate representation of channel conditions experienced across the BSS, leading to contention window sizes that are appropriate for the actual congestion level on the NPCA primary channel.

The contention window size determination method may also reduce collisions on the NPCA primary channel. When congestion is high, the scaling factor derived from average transmission attempt statistics may result in larger initial contention window sizes, which may spread device transmissions over a wider range of backoff values and reduce the probability of multiple devices selecting the same backoff value. Conversely, when congestion is low, the scaling factor may result in smaller initial contention window sizes closer to CWmin, which may reduce unnecessary delays while still providing sufficient randomness to avoid collisions. The ability to use access-category-specific scaling factors may further improve collision avoidance by allowing different scaling for traffic types that experience different levels of congestion.

The contention window size determination method may enhance transmission efficiency on the NPCA primary channel by reducing both collisions and unnecessary waiting time. When devices use contention window sizes that are appropriately scaled for current channel conditions, the devices may avoid the inefficiency of starting with CWmin when the channel is congested (which may lead to collisions and subsequent contention window doubling) and may avoid the inefficiency of using excessively large contention window sizes when the channel is lightly loaded (which may result in unnecessary delays before transmission). The periodic incorporation of client feedback may allow the AP to adapt the BSS-wide scaling factor to changing channel conditions over time.

The exception handling method described herein may provide improved stability in mesh network deployments where APs communicate with each other over backhaul links that share the same radio as fronthaul links. By pre-negotiating special BSS colors or MAC addresses for inter-AP communication and notifying associated STAs of the exception parameters, the method may prevent STAs from incorrectly classifying backhaul transmissions as OBSS and attempting NPCA transmissions to APs that are engaged in backhaul communication. The prevention of such inappropriate NPCA attempts may reduce disruption to backhaul communication, which may be carrying aggregated traffic from multiple STAs and may be sensitive to interruption.

The exception handling method may also prevent resource wastage that may result from unsuccessful NPCA attempts. When an NPCA-capable device attempts to transmit to a peer that is unavailable due to engagement in backhaul or P2P communication, the transmission may fail and the device may expend resources including energy for transmission, time waiting for acknowledgment, and contention window doubling for subsequent retry attempts. By aborting the NPCA switch when exception parameters indicate that the peer is unavailable, the method may conserve device resources and energy that would otherwise be wasted on unsuccessful transmission attempts.

The exception handling method may provide proper coordination in scenarios where a non-AP device maintains concurrent infrastructure association with an AP and P2P connection with another device on the same channel. The method may allow the AP to refrain from transmitting to the non-AP device on the NPCA primary channel when the non-AP device is engaged in P2P communication on the primary channel, while still allowing the AP to transmit to other non-AP devices. Similarly, the method may allow the P2P peer to refrain from transmitting to the non-AP device on the NPCA primary channel when the non-AP device is engaged in infrastructure communication on the primary channel. The selective application of NPCA exceptions based on which devices are engaged in communication may allow NPCA operation to continue for devices that are available while preventing inappropriate transmissions to devices that are unavailable.

The gain guidance method described herein may enable non-AP devices to make informed feature enablement decisions despite resource constraints. By receiving OBSS load parameters advertised by the AP, a non-AP device may calculate potential throughput gains for various features including NPCA, EMLSR, and DSO without requiring the non-AP device to independently measure channel conditions over extended periods. The OBSS load parameters may provide sufficient information for the non-AP device to estimate throughput under different feature combinations and to select the combination that provides the highest throughput gain within available resource constraints.

The gain guidance method may lead to optimized throughput performance based on actual network conditions. Because the potential throughput gains from NPCA, EMLSR, and DSO may vary depending on OBSS load characteristics, a non-AP device that selects features based on advertised OBSS load parameters may achieve higher throughput than a non-AP device that selects features arbitrarily or based on static preferences. For example, when the probability of primary channel occupancy with secondary channel availability (OLp\_i) is high, NPCA may provide substantial throughput gains and may be prioritized over EMLSR. Conversely, when the probability of full bandwidth occupancy (OL\_i) is high on one link but low on another link, EMLSR may provide substantial throughput gains by allowing the device to switch to the less congested link.

The gain guidance method may also lead to optimized power performance by enabling non-AP devices to avoid enabling features that provide minimal benefit under current network conditions. When OBSS load parameters indicate that a particular feature would provide little or no throughput gain, the non-AP device may refrain from enabling that feature and may conserve the resources that would otherwise be dedicated to supporting the feature. The resources conserved may include memory, dedicated hardware, and processing capacity that may be used for other purposes or that may allow the device to operate in a lower power state.

The advertisement of OBSS load parameters in beacon frames or UHR parameters may allow non-AP devices to obtain current network condition information without additional signaling overhead. The non-AP device may receive the OBSS load parameters as part of regular beacon reception and may update feature enablement decisions as network conditions change over time. The semi-static nature of the OBSS load parameters may provide stability in feature enablement decisions while still allowing adaptation to changing network conditions.

A number of implementations have been described. Nevertheless, it will be understood that various modifications may be made without departing from the spirit and scope of the disclosure. Accordingly, other implementations are within the scope of the following claims.

The following are further embodiments of the invention:
1. A system for non-primary channel access (NPCA) contention window size
   determination in a communication network, the system comprising:
   an access point (AP), including processing circuitry configured to
      obtain transmission attempt statistics on an NPCA primary channel for at least one access category (AC),
      determine an average queue short retry count based on the transmission attempt statistics,
      determine a basic service set (BSS)-wide scaling factor from the average queue short retry count, and
      transmit the BSS-wide scaling factor to one or more associated stations; and
   a station, including processing circuitry configured to
      receive the BSS-wide scaling factor from the AP,
      determine an initial contention window (CW) size using the BSS-wide scaling factor, and
      contend for channel access on the NPCA primary channel using the determined initial contention window size value.
2. The system of embodiment 1, wherein the AP processing circuitry is further configured to receive client feedback from the one or more associated stations, the client feedback including an average number of transmission attempts on the NPCA primary channel for the at least one access category before successfully transmitting a packet.
3. The system of embodiment 2, wherein the AP processing circuitry is further configured to incorporate the client feedback into the average queue short retry count determination.
4. The system of embodiment 1, wherein the BSS-wide scaling factor is specific to each access category.
5. The system of embodiment 1, wherein the BSS-wide scaling factor is common to all access categories.
6. The system of embodiment 1, wherein the station is further configured to calculate the initial contention window size using a formula given by: CW_init = min(2^Avg_QSRC_NPCA[AC] × (CWmin[AC] + 1) - 1, CWmax[AC]), where CWmin[AC] is a contention window minimum for the access category and CWmax[AC] is a contention window maximum for the access category.
7. The system of embodiment 1, wherein the AP is further configured to disregard an access category while calculating the average queue short retry count in response to the access category being missing from a set of traffic identifiers in use in the BSS.
8. The system of embodiment 1, wherein the station is further configured to reset the initial contention window size to a contention window minimum for the at least one access category in response to a time greater than a memory threshold elapsing since a last transmission on the NPCA primary channel.
9. The system of embodiment 1, wherein the at least one access category comprises one or more of voice, video, best effort, and background.
10. The system of embodiment 9, wherein contention window parameters for the at least one access category vary such that a contention window minimum for best effort is larger than a contention window minimum for voice.
11. A system for non-primary channel access (NPCA) exception handling for overlapping basic service set (BSS), the system comprising:
   an access point (AP), including processing circuitry configured to
      determine exception parameters including at least one of disallowed BSS colors or disallowed MAC addresses associated with inter-AP communication or peer-to-peer (P2P) communication, and
      transmit the exception parameters to one or more associated stations; and
   a station, including processing circuitry configured to
      receive the exception parameters from the AP,
      detect a potential NPCA opportunity based on an overlapping BSS (OBSS) physical layer protocol data unit (PPDU) or control frame exchange,
      determine whether a detected BSS color or MAC address matches the exception parameters,
      abort an NPCA switch and remain on a primary channel in response to the detected BSS color or MAC address matching the exception parameters, and
      switch to an NPCA primary channel and contend for channel access in response to the detected BSS color or MAC address not matching the exception parameters.
12. The system of embodiment 11, wherein the AP is further configured to pre-negotiate a special BSS color with a second AP for inter-AP communication, and wherein the disallowed BSS colors include the special BSS color.
13. The system of embodiment 12, wherein the station is further configured to refrain from performing NPCA for high efficiency (HE)/extremely high throughput (EHT)/ultra-high reliability (UHR) PPDUs that signal the special BSS color.
14. The system of embodiment 11, wherein the disallowed BSS colors include BSS color 0, and wherein the station is configured to refrain from performing NPCA over HE/EHT/UHR PPDUs with BSS color 0.
15. The system of embodiment 11, wherein the exception parameters further include a complete or reduced value of a BSS color of a BSS that NPCA-capable stations are associated with.
16. The system of embodiment 11, wherein the station is further configured to apply BSS color rules in response to the HE/EHT/UHR PPDUs being preceded by an OBSS control frame exchange determined based on MAC addresses.
17. The system of embodiment 11, wherein the control frame exchange includes at least one of a request-to-send/clear-to-send exchange, a multi-user RTS/CTS exchange, or a buffer status report poll/multi-band acknowledgment exchange.
18. The system of embodiment 11, wherein
   the station is a non-AP device that is associated with the AP while also hosting a P2P connection with a peer, and
   the disallowed MAC addresses include a MAC address of the peer.
19. A method for NPCA contention window size determination in a communication network, the method comprising:
   obtaining, by an AP, transmission attempt statistics on an NPCA primary channel for at least one AC;
   determining, by the AP, an average queue short retry count based on the transmission attempt statistics;
   determining, by the AP, a BSS-wide scaling factor from the average queue short retry count;
   transmitting, by the AP, the BSS-wide scaling factor to one or more associated stations;
   receiving, by a station, the BSS-wide scaling factor from the AP;
   determining, by the station, an initial contention window size using the BSS-wide scaling factor; and
   contending, by the station, for channel access on the NPCA primary channel using the determined initial contention window size.
20. The method of embodiment 19, further comprising receiving, by the AP, client feedback from the one or more associated stations, the client feedback including an average number of transmission attempts on the NPCA primary channel for the at least one access category before successfully transmitting a packet, and incorporating the client feedback into the average queue short retry count determination.

## Claims

1. A system for non-primary channel access (NPCA) contention window size determination in a communication network, the system comprising:
an access point (AP), including processing circuitry configured to
obtain transmission attempt statistics on an NPCA primary channel for at least one access category (AC),
determine an average queue short retry count based on the transmission attempt statistics,
determine a basic service set (BSS)-wide scaling factor from the average queue short retry count, and
transmit the BSS-wide scaling factor to one or more associated stations; and
a station, including processing circuitry configured to
receive the BSS-wide scaling factor from the AP,
determine an initial contention window (CW) size using the BSS-wide scaling factor, and
contend for channel access on the NPCA primary channel using the determined initial contention window size value.

2. The system of claim 1, wherein the AP processing circuitry is further configured to receive client feedback from the one or more associated stations, the client feedback including an average number of transmission attempts on the NPCA primary channel for the at least one access category before successfully transmitting a packet,
in particular,
wherein the AP processing circuitry is further configured to incorporate the client feedback into the average queue short retry count determination.

3. The system of claim 1 or 2, wherein the BSS-wide scaling factor is specific to each access category.
or
wherein the BSS-wide scaling factor is common to all access categories.

4. The system of one of the preceding claims, wherein the station is further configured to calculate the initial contention window size using a formula given by:
CW_init = min(2^Avg_QSRC_NPCA[AC] × (CWmin[AC] + 1) - 1, CWmax[AC]), where CWmin[AC] is a contention window minimum for the access category and CWmax[AC] is a contention window maximum for the access category.

5. The system of one of the preceding claims, wherein the AP is further configured to disregard an access category while calculating the average queue short retry count in response to the access category being missing from a set of traffic identifiers in use in the BSS,
and/or
wherein the station is further configured to reset the initial contention window size to a contention window minimum for the at least one access category in response to a time greater than a memory threshold elapsing since a last transmission on the NPCA primary channel.

6. The system of one of the preceding claims, wherein the at least one access category comprises one or more of voice, video, best effort, and background,
in particular,
wherein contention window parameters for the at least one access category vary such that a contention window minimum for best effort is larger than a contention window minimum for voice.

7. A system for non-primary channel access (NPCA) exception handling for overlapping basic service set (BSS), the system comprising:
an access point (AP), including processing circuitry configured to
determine exception parameters including at least one of disallowed BSS colors or disallowed MAC addresses associated with inter-AP communication or peer-to-peer (P2P) communication, and
transmit the exception parameters to one or more associated stations; and a station, including processing circuitry configured to
receive the exception parameters from the AP,
detect a potential NPCA opportunity based on an overlapping BSS (OBSS) physical layer protocol data unit (PPDU) or control frame exchange,
determine whether a detected BSS color or MAC address matches the exception parameters,
abort an NPCA switch and remain on a primary channel in response to the detected BSS color or MAC address matching the exception parameters, and
switch to an NPCA primary channel and contend for channel access in response to the detected BSS color or MAC address not matching the exception parameters.

8. The system of claim 7, wherein the AP is further configured to pre-negotiate a special BSS color with a second AP for inter-AP communication, and wherein the disallowed BSS colors include the special BSS color,
in particular,
wherein the station is further configured to refrain from performing NPCA for high efficiency (HE)/extremely high throughput (EHT)/ultra-high reliability (UHR) PPDUs that signal the special BSS color.

9. The system of claim 7 or 8, wherein the disallowed BSS colors include BSS color 0, and wherein the station is configured to refrain from performing NPCA over HE/EHT/UHR PPDUs with BSS color 0.

10. The system of one of the claims 7 - 9, wherein the exception parameters further include a complete or reduced value of a BSS color of a BSS that NPCA-capable stations are associated with.

11. The system of one of the claims 7 - 10, wherein the station is further configured to apply BSS color rules in response to the HE/EHT/UHR PPDUs being preceded by an OBSS control frame exchange determined based on MAC addresses.

12. The system of one of the claims 7 - 11, wherein the control frame exchange includes at least one of a request-to-send/clear-to-send exchange, a multi-userRTS/CTS exchange, or a buffer status report poll/multi-band acknowledgment exchange.

13. The system of one of the claims 7 - 12, wherein
the station is a non-AP device that is associated with the AP while also hosting a P2P connection with a peer, and
the disallowed MAC addresses include a MAC address of the peer.

14. A method for NPCA contention window size determination in a communication network, the method comprising:
obtaining, by an AP, transmission attempt statistics on an NPCA primary channel for at least one AC;
determining, by the AP, an average queue short retry count based on the transmission attempt statistics;
determining, by the AP, a BSS-wide scaling factor from the average queue short retry count;
transmitting, by the AP, the BSS-wide scaling factor to one or more associated stations;
receiving, by a station, the BSS-wide scaling factor from the AP;
determining, by the station, an initial contention window size using the BSS-wide scaling factor; and
contending, by the station, for channel access on the NPCA primary channel using the determined initial contention window size.

15. The method of claim 14, further comprising receiving, by the AP, client feedback from the one or more associated stations, the client feedback including an average number of transmission attempts on the NPCA primary channel for the at least one access category before successfully transmitting a packet, and incorporating the client feedback into the average queue short retry count determination.
